(19) Europäisches Patentamt

European Patent Office

Office européen des brevets

(11) **EP 1 465 192 A1**

(12) **EUROPEAN PATENT APPLICATION**

(43) Date of publication:
**06.10.2004 Bulletin 2004/41**

(51) Int Cl.⁷: **G11B 27/10**, G11B 27/30,
G11B 27/28, G10L 15/08

(21) Application number: **03290838.6**

(22) Date of filing: **04.04.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **Thomson Licensing S.A.**
**92648 Boulogne Cedex (FR)**

(72) Inventors:
 • **Stauder, Jürgen**
 **35440 Montreuil sur Ille (FR)**

• **Cupeau, Bertrand**
 **35700 Rennes (FR)**
• **Oisel, Lionel C.**
 **35137 Pleumeleuc (FR)**
• **Chevallier, Louis D.**
 **35520 La Meziere (FR)**

(74) Representative: **Rossmanith, Manfred, Dr. et al**
**Deutsche Thomson-Brandt GmbH**
**European Patent Operations**
**Karl-Wiechert-Allee 74**
**30625 Hannover (DE)**

(54) **Method for detection of acoustic events in audio signals**

(57)     A method for detecting acoustic events in audio signals is presented, which compares the shape of an audio signal to be detected to a predetermined reference shape. The search is effected within a floating window, which is moving across the whole length of the audio recording. For comparison, the shape of the audio signal inside the floating window is approximated by a basic shape. The basic shape is constructed using basic geometrical shapes, such as squares and triangles. Furthermore, the occurrence of peak amplitudes of the signal inside the window is compared to a predetermined pattern of peak amplitudes. Additionally, a frequency spectrum analysis is performed inside the window. The frequency spectrum is compared to the known frequency spectrum of the acoustic event searched for. The results of the comparisons are combined and a signal is issued upon detecting the acoustic event.

Fig. 4

## Description

The invention relates to a method for detection of acoustic events in audio signals. The terms sound, audio and acoustic event or signal are used interchangeably throughout the following specification.

## Background

The detection of specific audio events in recorded or live audio contents is required in many contexts, including personal and professional use. In the following, the invention is described using percussive-type audio events, but the method is not limited to this type of audio signal.

In applications for sound retrieval, specific audio events may be searched in sound or audio databases or the like. These databases may have been pre-indexed for speeding up the search, but this is not a requirement for the inventive method.

The invention may also be used for real-time monitoring or surveillance applications. It is thus possible to detect predefined audio events, e.g., for triggering alarms or activating other devices, such as lights, cameras, or the like.

In the film industry for example, audio recordings often have to be post-processed, e.g., for cleaning purposes, or for improving the sound by replacing original sound samples, or fragments thereof, with samples of better quality. The invention may also be used for alleviating the task of audio and video synchronization. When producing a film, individual scenes are often taken repeatedly until the director is satisfied with the results or in order to have different views of the same scene for later selection. During a day of film production, a number of takes or shots are captured, possibly by multiple cameras. Each camera will deliver one or more video sequences. Each video sequence - also called daily - contains a number of takes, up to several hundred. The video sequences may physically be contained on film rolls, magnetic tapes, hard disc drives (HDD), optical discs or other types of media. The format may be analog, digital, uncompressed or compressed, e.g. according to the MPEG standard. In general, accompanying audio tracks are captured with audio tools and stored on audio media. The audio media may comprise tapes, optical disks, hard disk drives (HDD) or other types of media. The audio format may be analog, digital, uncompressed or compressed, e.g., according to the MPEG standard. Often, the audio and video information must be combined and synchronized onto one single medium, e.g., a cinematographic film, or a video tape. Since the audio and video recording apparatus are not necessarily synchronized, or synchronization is poor, even though time codes may be recorded along with the sound and images, the task of synchronization needs to be performed during post-processing.

In order to indicate the beginning of a new shot or take, special tokens are generally used. These tokens may, *inter alia,* appear in the form of slates, often also referred to as clapperboards, clapboards or clappers. The term slate is used in the following interchangeably as a synonym of a token where appropriate for better understanding. Slates typically have a body and a hinged arm, which is slapped against the body at the beginning of the take. Slates can additionally contain written, printed or electronically displayed information about the take. This information may include production title, scene title, take title, take number, date and time or time code. At the beginning of a take the slate is filmed and the slate arm is slapped to the slate body. The noise associated to the slapping of the slate arm against the slate body is a specific audio event that may be detected and used for assisting the processing of audio tracks. These sound marks indicate the beginning of a scene shot on the audio recording and are used for synchronizing the audio tracks with the video tracks during post-processing. In the same time, the event of the slate arm making contact with the slate body is a specific visual event, which substantially coincides with the aforementioned specific audio event. During post-processing the various takes are reviewed for quality and/or acceptability by the director and/or the cutter for identifying the take which will be used for the completed film. In order to find the beginning of a respective take, the video sequence is reviewed for the occurrence of slates. In parallel, the sound recording is reviewed for the sound associated to the slate arm slapping against the slate body. Audio-visual synchronization is then realized by using the specific audio information from the slate arm clapping and detecting the time instant when the arm of the slate makes contact with the body on the video track. More recently introduced slates incorporate an electronic display, which continuously displays a time code. A time code control may then synchronize the time code in a sound recording apparatus and a camera. By doing so it is possible to assign to each image the accompanying sound information or time code.

Until today, the process of searching slates and the accompanying sound in recorded material is often done manually, which is time consuming and sometimes cumbersome. Manual slate identification requires manually cueing or rewinding the recording to the occurrence of a slate or the slapping sound, and extracting the information contained on the slate from the video recording. This task is performed by an operator using a video terminal with playback / forward / backward functions. The information from the slates is then read from the video and manually entered into an audio-visual synchronization tool. After that, for synchronization purposes, the status of the slate arm has to be detected, i.e. the slapping of the arm to the body. In view of the time consuming manual process of detecting the occurrence of a specific sound in a recorded or live audio signal or audio stream, and in view of possible new services to be made available to customers, it is desirable to provide a method for automatically performing this task.

## Summary of the invention

The invention disclosed hereinafter provides a method that enables automatic detection of specific audio events in audio signals. It may advantageously be adapted for detecting specific sound events out of a large variety of sound events. Preferred embodiments of the invention are disclosed in the dependent subclaims. The invention is based on the fact that most audio events to be detected can be approximated by a simplified model. One part of the task of detecting a specific audio event may thus be represented by comparing a known reference shape with a shape derived from the audio signal under investigation.

According to the invention an audio signal may be analyzed in a two-path approach.

In a first path a frequency spectrum of the signal is calculated using a sliding temporal window. The temporal window contains a part of the audio signal ranging over a determined period of time or a determined number of samples in a digital recording. The frequency spectrum is then calculated using known transformations such as Fourier Transform (FT) or Discrete Cosine Transform (DCT). The resolution of the frequency spectrum is adapted according to the kind of audio event and depends on the period of time contained within the window and the bandwidth of the individual frequencies, which form the spectral support points. The window may also have different shapes. Commonly known window shapes contain rectangular, Hann, Bartlett, Blackman and Hamming window. The different window shapes differently affect the spectrum in terms of levels and accuracy and may be selected according to the signal to be investigated. After spectrum analysis is performed, a first criterion is extracted from the spectrum. A suitable criterion may be, e.g., the signal whiteness, i.e., its level distribution across all or a certain band of frequencies.

The spectral distribution of searched audio events is expected to be uniform since percussion-like events essentially contain white noise. The object of spectral analysis is to detect such distributions. For that purpose, the time-domain signal is transferred into a frequency domain signal, e.g., by means of a Fourier Transform. The window under analysis may advantageously be 10ms wide, however, depending on the signal to be detected, the windows may be wider or smaller.

Another approach is to use a bank of 2 filters in parallel. The input signal is applied to the two filters, one high pass and one low pass filter with a common cut-off frequency, e.g., as mentioned below. The mean energy is then measured at the outputs of both filters and a ratio is calculated. The energy levels E in two distinct frequency intervals, e.g., 0 - 2000 Hz and 2000 Hz - 20 kHz, are computed and compared. The result of the comparison is a first parameter *M1.*

$$M1 = f(E_{0\text{-}2000\,Hz}/E_{2000\text{-}20000\,Hz})$$

The function *f* is defined as follows:

$$f{:}x{\rightarrow}[0\text{-}1]$$

*f* yields values close to 1 for x being close to 1 in a continuous manner. A suitable simplified function may be defined as follows:

in an interval $x[0{\rightarrow}1]{:}f(x){=}x$ , and
in an interval $x[1{\rightarrow}\infty]{:}f(x){=}\dfrac{1}{x}$.

In a second path the signal shape is evaluated. The signal shape analysis comprises two steps, the signal basic shape analysis BSA and the characteristic peak analysis CPA. For the basic shape analysis, reference shapes for each audio event and representations thereof built from simple geometrical shapes, e.g., triangles, squares, and combinations thereof, are known *a-priori*. Also, the ratio of the area of the reference shape and the actual total area of an envelope function for the searched audio signal is known beforehand. For locating an audio event, it is tried to construct the known basic shape of the audio event from sample values within a period of time of the audio signal. The period of time which is looked at is also referred to as a sliding window. The sliding window aids in splitting the audio signal, which may be a stream of considerable length, or even an infinite real time audio signal, into smaller blocks, which may be analyzed with less computational effort. The term window emphasizes the fact that, at each time, only a fragment of the total length of the audio signal is covered. The term sliding expresses the fact that the windows literally move across the audio signal, or the audio signal moves beneath the window. The sliding window may be split into a plurality of smaller sub-windows. The time period covered by the sliding window, or the number of sub-windows altogether, is adapted to the length of the audio event that is searched for. In a preferred embodiment, the widths of the individual sub-windows of the sliding window may be chosen to be of exponentially increasing size, e.g., 5, 15, 45 and 135ms. The actual width and the total number of the sub-windows depends, however, on the signal to be analyzed, and may vary substantially from the values given above. For constructing the basic shape from the audio signal within the window, first the signal is rectified, i.e., the absolute value of the signal is determined for every time instant or sample value. An envelope is then calculated for the sliding window and the sub-windows. An envelope function represents the area underneath a vector connecting all peak values of a sample. For a digital signal the area of an envelope may be calculated by summing up the rectified sample values inside each of the plurality of sub-windows, or the sliding window. The sums computed for each sub-window provide an estimation of the acoustic energy corresponding to the window's time interval. The sums of individual sub-windows may be used to determine the dimensions of the simple geometrical shapes, which form the basic shape. The basic shape may then be described by a set of parameters, also referred to as parametric curve model. For comparison purposes, reference curve parameters are learned from reference examples of the addressed sound event. Parameters may, *inter alia,* comprise the ratio of the areas of the individual sub-windows and the total area of the sliding window, calculated for both, the basic shape representation and the envelope, or the ratio of the basic shape and the envelope for individual sub-windows or the total sliding window. By considering ratios, a certain amount of normalization is introduced, which may be advantageous for the process of locating audio events.

The characteristic peak analysis is based on a reference model of peaks to be detected. The audio event, which is searched for, may have a pattern of characteristic amplitude peaks in the time domain at certain times after the beginning of the event. Therefore, peaks in the audio signal are detected and compliance with the pattern from the reference model is checked.

The audio signal, which is investigated, may also be normalized prior to searching for specific audio events. However, the shape analysis itself advantageously provides a certain amount of normalization by evaluating ratios and shapes instead of absolute values only.

The first and second path may advantageously be processed in parallel, based on the same audio sample data.

Depending on the audio signal to be processed, preprocessing, e.g., filtering, may be applied prior to searching the audio event. Filtering is preferably performed prior to any of the processing steps. However, if the signal properties require the signal not to be filtered for a certain type of processing, filtering may be omitted for these processing steps, or may be omitted at all. Typically, an audio signal will be high-pass filtered in order to remove low frequency background noise, which is low-discriminative and may cover or mask relevant information.

The signal shape analysis outputs two parameters, $M2$ and $M3$, which will be addressed in detail in the description of the drawing.

A second criterion is thereby established, which is describing the difference between the parameters of the learned reference curve and the curve from the actual signal under investigation.

The decision process decides whether there is a relevant event at the current location or not. This decision is performed by multiplying the three parameters $M1, M2$ and $M3$ output from the analysis stages and comparing the result to a predefined threshold Th:

$$M1 \times M2 \times M3 \geq Th$$

The threshold defines how close the approximated shape of the analyzed sound event needs to be to the modeled sound event that is searched for, in order to trigger a signal indicating successful detection. Depending on the desired recall/precision level the threshold may be increased or decreased.

In the following, the invention will be described in greater detail with reference to the drawing, using detection of a percussion event as an example. The percussive audio event in this example may be the sound of a slate arm slapping against the slate body. However, the invention is not limited to this type of audio event. Any audio event which can be unambiguously described by distinct parameters may be detected in recorded or live audio signals.

## Brief description of the drawing

In the drawing,

Fig. 1   shows a basic block diagram of the audio event detection,

Fig. 2   shows a representation of a sampled audio event,

Fig. 3   shows a representation of a rectified version of the sampled audio event,

Fig. 4   shows the extraction of an characteristic shape from the audio event, and

Fig. 5   shows a graphical representation of an ideal and a practical function suitable for deriving the parameter $M1$.

In the drawing, same reference numerals and designators refer to identical or similar parts.

## Detailed description of the invention

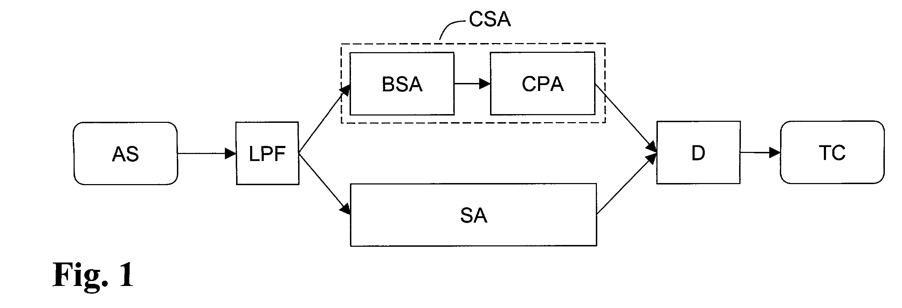

The basic block diagram shown in Fig. 1 describes the processing path of an audio sample AS during acoustic event detection. In a first step LPF, the audio sample AS is high-pass filtered in order to remove possible low frequency background noise. Low-pass filtering may be implemented using a common recursive $2^{nd}$ order filter.

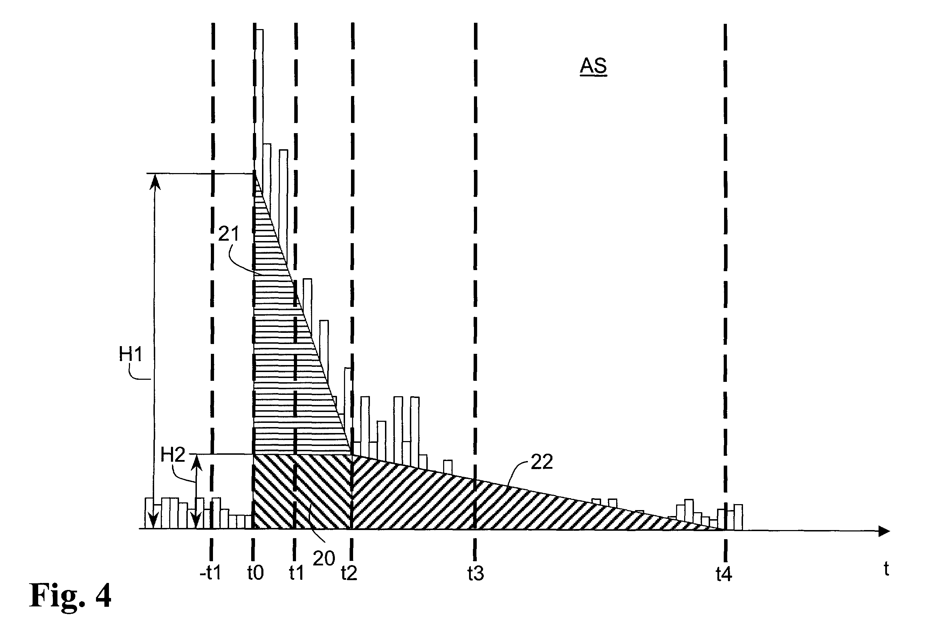

After filtering in the first step LPF, the processing splits up into two paths, the characteristic shape analysis CSA and the spectral analysis SA. The characteristic shape analysis CSA comprises the steps of basic shape analysis BSA and characteristic peak analysis CPA. Characteristic shape analysis CSA and spectral analysis SA will be described in greater detail with reference to Fig. 4. Finally, a decision D is made and a corresponding time-code TC, which was recorded along with the audio information, is output for further processing.

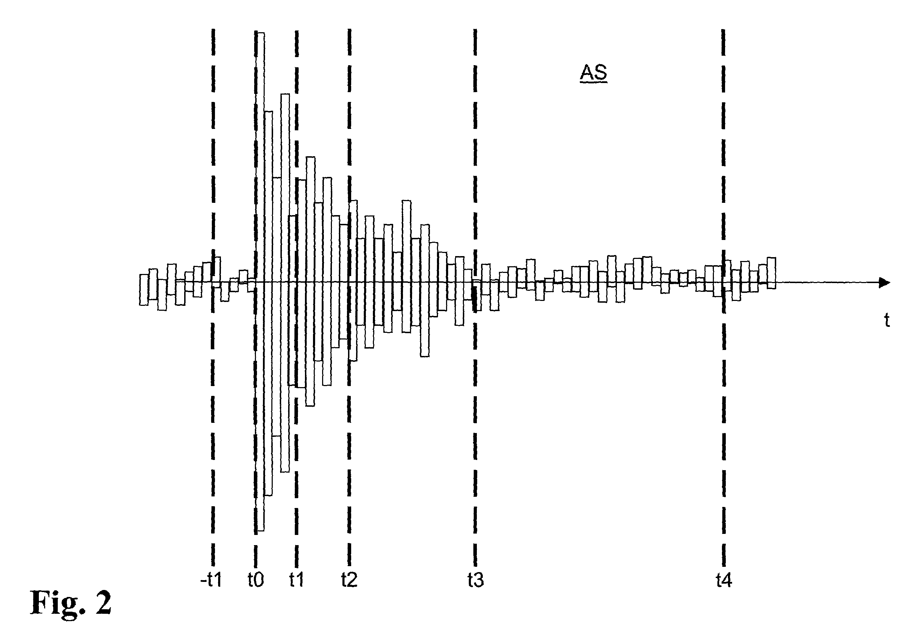

In Fig. 2 a sample of an audio signal AS in the time domain is shown, which is split by time markers -t1 to t4 into five time intervals. For the sake of clarity, the displayed resolution of the audio event sample was chosen rather low, and the waveform is are approximated by bars. This audio sample AS is used in the following to explain the basic shape analysis.

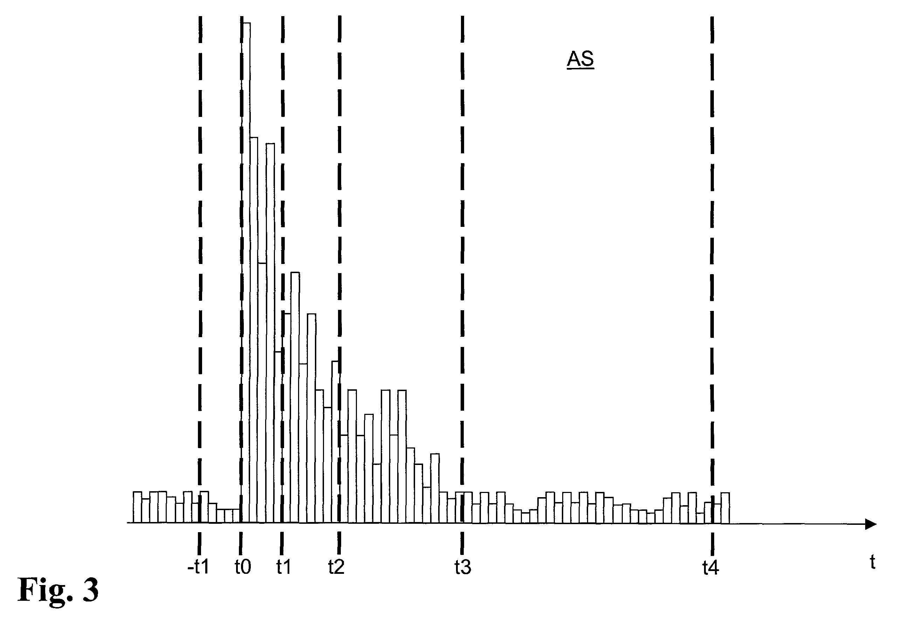

In Fig. 3 the audio sample AS of Fig. 2 is shown in a rectified representation. The time markers -t1 to t4 are in the same locations as they are in Fig. 2.

Fig. 4 shows an example for extracting the basic shape from the audio signal AS shown in Figs. 2 and 3. The audio sample AS is therefore approximated by simple geometrical shapes. In this figure the audio sample may be approximated by a combination of one rectangle 20 and two triangles 21, 22. The area of the triangular shapes may advantageously be computed as follows: The height $H1$ of the first triangle 21 is estimated from the mean value of the samples found in the first window defined by the time markers t0 and t1. The triangle itself then covers the time interval between the time markers t0 and t2, i.e., the first two windows. The height H2 of the second triangle 22 is estimated from the mean value of the samples found in the third window defined by the time markers t2 and t3. The width of the second triangle ranges from time markers t2 to t4, i.e., the third and fourth window. The mean values may easily be computed by summing up the discrete values at every sampling point and dividing the result by the number of samples. However, depending on the reference shape of the audio event that is searched for, other ways of approximating the shape of the envelope may be used, and other methods to determine the measures of geometrical shapes may be applied.

A second parameter $M2$ is computed by comparing the total surface $S$ of the approximating shape represented by the rectangle 20 and the triangles 21, 22 to the integrated values of the audio sample, i.e., the area underneath the envelope. The surface S can be calculated as follows:

$$S = \frac{(H1\text{-}H2)\times(t2\text{-}t0)}{2} + \frac{H2\times(t4\text{-}t2)}{2} + (t2\text{-}t0)\times H2$$

The audio signal sample is integrated over the corresponding time interval from t0 to t4. For a digital audio signal, integration may be estimated as the sum of the individual audio sampling values $V_n$ across the four windows, or to put it another way, from t0 to t4:

$$I \;=\; \sum_{t0}^{t4} V_n(t)$$

The second parameter $M2$ may then be expressed as:

$$M_2 = f(S/I)$$

A third parameter $M3$ is determined as the ratio of the first window's mean energy value and the mean energy of a window of equal size located before the attack point. This new window is determined by the time markers -t1 to t0. The third parameter allows detecting sharp percussion signals. The bigger the ratio, the steeper is the transition. The value is calculated so as to approach 1 for values of x -> +infinity, e.g., by virtue of the function:

$$F(x) = 1 + 1/x$$

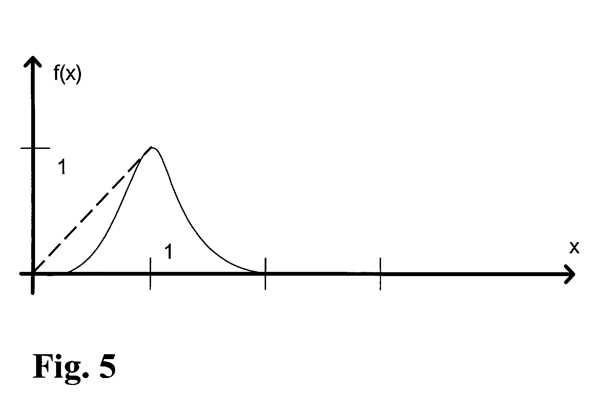

Fig. 5 shows a graphical representation of a suitable function for deriving the parameter $M1$. In the graph, the dashed line represents a possible function f(x) for the range of x from 0 to 1. The range of x from 1 to infinity is represented by a function f(x)=1/x, shown in a solid line. It is, however, also possible to use a function f(x)=1/x, which is mirrored at x=1, thereby introducing a certain amount of weighting. This part of the function is also shown in a solid line. Of course, it is possible to use other functions, as appropriate for the desired purpose.

**Claims**

1. A method for detecting an acoustic event in audio signals comprising any combination of the steps:

    a) determining the spectral distribution of frequencies for a time period of the audio signal, and comparing the spectral distribution of the audio signal to a reference spectral distribution of the acoustic event,
    b) determining a basic shape of the audio signal in the time domain for a time period of the audio signal, geometrically describing the basic shape, and comparing the geometrically described basic shape to reference shapes of the acoustic event,
    c) determining occurrence of peaks in the audio signal, and comparing the occurrence of peaks in the audio signal to peaks in a reference signal, and
    d) classifying the audio signal into event detected or no event detected.

2. The method of claim 1, **characterized in that** the audio signal is pre-processed prior to event detection.

3. The method of claim 2, **characterized in that** preprocessing contains normalizing, filtering and/or noise removal.

4. The method of claim 1, **characterized in that** one interval of the audio signal at a time is considered.

5. The method of claim 4, **characterized in that** the interval under consideration is divided into sub-intervals.

6. The method of claim 1, **characterized in that** the spectral distribution is determined by applying a transform function.

7. The method of claim 1, **characterized in that** the spectral distribution is determined by applying band-pass filtering.

8. The method of claim 1, **characterized in that** the basic shape is constructed from simple geometrical shapes and combinations thereof.

9. The method of claim 8, **characterized in that** the geometrical shapes are constructed using an envelope function over the respective interval or sub-interval.

10. The method of claim 9, **characterized in that** the basic shape and the envelope function represent the acoustic energy of the signal in the respective interval or sub-interval.

11. The method of claim 1, **characterized in that** the slope of transitions at the beginning of the acoustic event is evaluated.

12. The method of claim 11, **characterized in that** evaluating the slope of transitions comprises comparing the acoustic energy in two equally sized adjacent sub-intervals.

13. The method according to claim 1, **characterized in that** peaks are detected by using ratios of the original signal value and the value of the according basic shape for individual points of time or sample values.

**Fig. 1**

AS

Fig. 2

Fig. 3

**Fig. 4**

EP 1 465 192 A1

Fig. 5

**European Patent Office**

## EUROPEAN SEARCH REPORT

Application Number

EP 03 29 0838

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 969 399 A (IBM) 5 January 2000 (2000-01-05) * paragraphs [0011], [0030] * --- | 1-13 | G11B27/10 G11B27/30 G11B27/28 G10L15/08 |
| X | US 3 919 479 A (MOON WARREN D ET AL) 11 November 1975 (1975-11-11) * column 7, line 35 - column 8, line 62 * --- | 1-13 | |
| X | US 6 185 527 B1 (PETKOVIC DRAGUTIN  ET AL) 6 February 2001 (2001-02-06) * abstract * ----- | 1-13 | |

TECHNICAL FIELDS SEARCHED (Int.Cl.7)

G11B
H04N
G10L

The present search report has been drawn up for all claims

| Place of search | Date of completion of the search | Examiner |
|---|---|---|
| THE HAGUE | 7 October 2003 | Mourik, J |

## ANNEX TO THE EUROPEAN SEARCH REPORT
## ON EUROPEAN PATENT APPLICATION NO.                    EP 03 29 0838

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2003

| Patent document cited in search report | | Publication date | Patent family member(s) | | Publication date |
|---|---|---|---|---|---|
| EP 0969399 | A | 05-01-2000 | US | 6163510 A | 19-12-2000 |
| | | | CA | 2271535 C | 02-04-2002 |
| | | | EP | 0969399 A2 | 05-01-2000 |
| | | | US | 6452875 B1 | 17-09-2002 |
| | | | US | 6310839 B1 | 30-10-2001 |
| | | | US | 6377519 B1 | 23-04-2002 |
| | | | US | 6414914 B1 | 02-07-2002 |
| US 3919479 | A | 11-11-1975 | NONE | | |
| US 6185527 | B1 | 06-02-2001 | CN | 1261181 A | 26-07-2000 |
| | | | JP | 2000259168 A | 22-09-2000 |
| | | | TW | 469422 B | 21-12-2001 |